# EUROPÄISCHE PATENTSCHRIFT

(11) **EP 3 310 865 B1**
(45) Veröffentlichungstag und Bekanntmachung des Hinweises auf die Patenterteilung: **05.01.2022**
(21) Anmeldenummer: 16730824.6
(22) Anmeldetag: 17.06.2016
(51) Int. Cl.: C09J 7/38, C09J 153/02

(54) **KLEBMASSE**
ADHESIVE
ADHÉSIF

(30) Priorität: 17.06.2015 DE 102015109659
(43) Veröffentlichungstag der Anmeldung: 25.04.2018
(73) Patentinhaber: Lohmann GmbH & Co. KG, 56567 Neuwied (DE)
(72) Erfinder: KOPF, Patrik, 56567 Neuwied (DE); LEON, Vincent, 56068 Koblenz (DE); WIERSCHEM, Simone, 56754 Roes (DE)
(74) Vertreter: Greiner, Elisabeth
(86) Internationale Anmeldenummer: PCT/EP2016/064038
(87) Internationale Veröffentlichungsnummer: WO 2016/202994

(56) Entgegenhaltungen:
- EP-A1- 2 226 369
- US-A- 4 133 731

## Beschreibung

Die vorliegende Erfindung betrifft eine Klebmasse, die ein Multiarm-Vinylaromaten-Blockcopolymer, ein oder mehrere Klebharze sowie ein oder mehrere Vernetzungshilfsmittel enthält. Zudem bezieht sich die vorliegende Erfindung auf ein Haftklebemittel mit der genannten Klebmasse und einem Trägermaterial und/oder einer Abdeckung. Weiterhin umfasst die Erfindung ein Verfahren zur Herstellung eines solchen Haftklebemittels. Gegenüber bisher bekannten Klebesystemen weist ein derartiges Haftklebemittel eine deutliche Verbesserung der Adhäsion auf harten, unpolaren Oberflächen wie z.B. neuartigen Lackoberflächen der Automobilindustrie auf.

Ein Haftklebemittel wird im Allgemeinen verwendet, um zwei Substrate zusammenzufügen, so dass eine dauerhafte Verbindung entsteht. Spezielle Haftklebemittelprodukte werden beispielsweise in der Automobilindustrie zur permanenten Verklebung von Bauteilen an der Karosserie verwendet. Typische Beispiele hierfür sind die Emblemverklebung sowie das Fixieren von Kunststoffteilen und Gummitürdichtungen.

Lacke, die heute bevorzugt zur Lackierung von Oberflächen insbesondere im Automobilbereich Verwendung finden, müssen immer höheren Anforderungen an z.B. Kratzfestigkeit, Glanz oder Wärme- bzw. Lösemittelbeständigkeit genügen, und sollten unter Umweltgesichtspunkten auch lösemittelfrei sein. Insbesondere im Hinblick auf den letztgenannten Punkt werden neue Fertigungsverfahren eingesetzt wie das der Pulverbeschichtung, wodurch der Einsatz von Lösemitteln entfällt. Auch die Nanopartikel-Technologie findet stärkeren Einsatz. Darüber hinaus gibt es derzeit Bestrebungen, Lackoberflächen selbstheilend zu gestalten, d.h. dass sich Kratzer z.B. bei Einwirkung hoher Temperaturen selbst reparieren.

Als Folge dieser Entwicklung sind insbesondere die obersten Lackschichten heute härter, d.h. es werden stark vernetzte Systeme - oft mit Polysiloxanen und anderen Additiven versehen - eingesetzt, die eine wesentlich geringere Oberflächenenergie besitzen als frühere Lackoberflächen. Diese Lacke können superhydrophobe Eigenschaften aufweisen.

Die Anforderungen an Haftklebemittel zur Verklebung von Emblemen, Anbauteilen oder Einstiegsleisten auf diese Lackschichten sind deshalb gestiegen. Die Verklebung soll nicht nur eine hohe Festigkeit und Dauerbeständigkeit aufweisen, sondern diese Festigkeit auch sofort nach der Verklebung, also innerhalb von Minuten, aufbauen.

Schaumklebebänder mit Schaumträger und Haftklebeschichten auf Basis von Polyacrylat sind bereits bekannt. Der Schaumträger kann dabei im Wesentlichen elastisch ausgebildet sein, meist ist der Schaumträger dann auf Basis von Polyolefin oder Polyurethan. Viskoelastische Schaumträger beruhen größtenteils auf Polyacrylaten. Die viskoelastischen Schaumklebebänder sind so aufgebaut, dass bereits der Schaumträger häufig selbst als Haftklebstoff funktioniert. Es können auch zusätzliche haftklebrige Schichten aufgebracht sein. Diese haftklebrigen Schichten basieren heute überwiegend ebenfalls auf Polyacrylat.

Der Nachteil der bekannten polyacrylatbasierten Schaumklebebänder besteht darin, dass die Polyacrylat-Haftklebeschichten auf niederenergetischen Oberflächen nur unzureichende Haftung zeigen, oder die Haftung erst über Stunden und Tage aufgebaut wird.

Für Klebebänder mit viskoelastischen Schaumträgern wurden deshalb Haftklebeschichten auf der Basis von Synthesekautschuk vorgeschlagen. Beispielsweise beschreibt die Patentanmeldung EP 2 226 369 A1 ein Klebeband mit einer viskoelastischen Schaumträgerschicht auf Basis von Polyacrylat, wobei die Haftklebemasseschicht auf Synthesekautschuk basiert. Zusätzlich wird diese Klebmasse mittels Elektronenstrahlhärtung chemisch vernetzt. Durch die chemische Vernetzung wird eine gute Haftung auf unpolaren Oberflächen kombiniert mit ausreichender Kohäsion bei erhöhter Temperatur erreicht.

Die Patentanmeldung EP 2 690 147 A2 beschreibt ebenfalls ein Klebeband mit einer viskoelastischen, acrylatbasierten Schaumschicht. Die Haftklebemasse basiert auf einem Gemisch mindestens zweier unterschiedlicher Synthesekautschuke. Eine Vernetzung der Klebmasse findet nicht statt. Auch dieses Klebeband zeigt hohe Klebkräfte auf dem unpolaren Untergrund Polyethylen, ausreichende Kohäsion bei 70°C und außerdem stabile Schälwerte auf Stahl sofort nach der Verklebung bis zu 3 Tagen.

Der Nachteil dieser Klebebänder liegt darin, dass die viskoelastischen Träger häufig sehr weich eingestellt werden, um auch bei Temperaturen unter -18°C noch weich und elastisch zu sein. Dies bedingt aber Schwierigkeiten bei der Dimensionsstabilität bei Raumtemperatur und darüber. Alternativ sind sie sehr hart eingestellt, um bei Raumtemperatur eine geringe Plastizität aufzuweisen, verspröden dann aber bei niedrigen Temperaturen.

Aufgabe der Erfindung ist es, eine Klebmasse und ein Haftklebemittel zu schaffen, die bessere Eigenschaften als im Stand der Technik bekannte Klebmassen und Haftklebemittel aufweisen. Insbesondere ist es eine Aufgabe der vorliegenden Erfindung, eine Klebmasse und ein Haftklebemittel zu schafften, das für die Verklebungen auf Oberflächen mit einer niedrigen Oberflächenenergie geeignet ist, und sich durch eine gute Verbundhaftung auf niederenergetischen und/oder superhydrophoben Oberflächen wie neuartigen Lacken der Automobilindustrie auszeichnet. Gelöst wird diese Aufgabe durch die anspruchsgemäße Klebmasse und das anspruchsgemäße Haftklebemittel.

Demgemäß betrifft die Erfindung eine Klebmasse, die mindestens ein Multiarm-Vinylaromaten-Blockcopolymer, mindestens ein Klebharz und mindestens ein Vernetzungshilfsmittel enthält.

Nach DIN 53501 bezeichnet man unvernetzte, aber vernetzbare Polymere mit gummielastischen Eigenschaften bei Raumtemperatur als Kautschuke. Naturkautschuk besteht aus dem Monomer Isopren (2-Methyl-1,3-butadien, C₅H₈), das in extrem einheitlicher Struktur zum Terpen cis-1,4-Polyisopren polymerisiert ist. Naturkautschuk ist längerkettig als alle Synthesekautschuke, nicht schmelzbar, nur mit Zusätzen vernetzbar, und daher für die vorliegenden Zwecke weniger geeignet.

Synthesekautschuke sind makromolekulare Stoffe synthetischen Ursprungs. Sie haben kürzere Ketten, sind deshalb schmelzbar oder sogar flüssig und daher für die Herstellung der erfindungsgemäßen Klebmasse besser geeignet. Grundsätzlich sind zur Herstellung der vorliegenden Klebmasse alle Arten der Synthesekautschuke einsetzbar, d.h. Styrol-Butadien-Kautschuk (SBR), Polybutadien (BR), Isopren-Kautschuk (IR), Acryl-nitril-Butadien-Kautschuk (NBR), Chloropren-Kautschuk (CR) oder Butylkautschuk (IIR), um die wichtigsten hier zu nennen. Diese Arten treten bezüglich ihrer Topologie in linearer, verzweigter oder sternförmiger Form auf.

Bevorzugt eingesetzt werden hier jedoch Styrol-Blockcopolymere (SBCs), d.h. synthetische Polymere aus zwei "harten" Styrolendblöcken und Isopren (SIS) oder Butadien (SBS) oder auch Mischungen wie Ethylen Butylen (SEES) als "weichen" Mittelblöcken. SBCs sind als Klebstoffkomponenten besonders geeignet, weil sich bei niedriger Temperatur die S-Blöcke verschiedener Moleküle zusammenlagern und eine Phase bilden. Deshalb hält dieses Kautschukmaterial bei Raumtemperatur gut zusammen und ist sehr kohäsiv. Bei höheren Temperaturen ab ca. 80°C lösen sich die S-Blöcke voneinander, der Kautschuk beginnt zu schmelzen, die Kohäsion versagt. Aus diesem Grunde sind SBCs bevorzugte Kautschuke in Hotmelt-Klebstoffen.

Besonders bevorzugte Elastomere sind Multiarm-Vinylaromaten-Blockcopolymere aus der Gruppe der Styrol-Blockcopolymere (SBC), bevorzugt aus der Gruppe der Styrol-Isopren-Blockcopolymere (SIB), der Styrol-Butadien-Blockcopolymere (SBB) oder der Styrol-Ethylen-Butylen-Blockcopolymere (SEBS), und/oder einem Hydrierungsprodukt dieser Blockcopolymere, wobei das Blockcopolymere aus Blöcken von Vinylaromaten und Blöcken von olefinischen Aliphaten besteht. Das Multiarm-Vinylaromaten-Blockcopolymer ist ein verzweigtes Copolymer mit mehr als 10 Seitenarmen. Die Topologie ist dabei bevorzugt sternförmig. SBCs mit einer hohen Verzweigung von mehr als 10 Seitenarmen sind besonders bevorzugt. Diese SBCs werden in Verbindung mit einem Styrolgehalt von etwa 10 bis 80 % oder 15 bis 40% eingesetzt. Die Erfinder haben herausgefunden, dass die Verwendung von Multiarm-Vinylaromaten-Blockcopolymeren mit einer hohen Verzweigung mit mehr als 10 Seitenarmen in Verbindung mit einem geringen Styrolgehalt von etwa 10% zur Herstellung der erfindungsgemäßen Klebmasse vorteilhaft ist, und zu guten adhäsiven Eigenschaften, hoher Klebkraft, Temperaturbeständigkeit und Flexibilität der erfindungsgemäßen Klebmassen beiträgt. Ein solches Blockcopolymer ist beispielsweise unter dem Namen HT 1200 von der Firma Kraton Polymers erhältlich.

Einen weiteren Bestandteil der erfindungsgemäßen Klebmasse bildet zumindest ein Klebharz. Bei Klebharzen handelt es sich um klebrig machende Stoffe, mit deren Hilfe aus geeigneten Rückgratpolymeren Klebstoffe formuliert werden können, d.h. die Klebharze verleihen den Rückgratpolymeren z.B. adhäsive, benetzende und klebrig machende Eigenschaften. Eine Übersicht über Klebharze allgemein findet sich im Kapitel "Tackifier Resins", Donatas Satas, "Handbook of Pressure Sensitive Adhesive Technology", Second Edition, edited by Donatas Satas, Van Nostrand Reinhold New York, Seiten 527 bis 544. Klebeharze sorgen für die richtigen Glasübergangstemperatur (Tg) der Mischung und Adhäsion auf bestimmten Substraten. Geeignete Glasübergangstemperaturen liegen zwischen ca. -50°C und 5°C, bevorzugt zwischen ca. -40°C und -25°C.

Klebharze können grundsätzlich unterteilt werden in synthetische (z.B. Kohlenwasserstoffharze), halbsynthetische (z.B. Terpenphenolharze) und natürliche Harze und deren Derivate (Kolophoniumderivate). Die Kohlenwasserstoffharze können weiter unterteilt werden in aliphatische Kohlenwasserstoffharze (üblicherweise synthetisiert aus dem C5-Strom der Erdölaufbereitung), aromatische Kohlenwasserstoffharze (aus dem C9-Strom der Erdölaufbereitung oder auch dem Steinkohleteer) und gemischten Harzen aus C5- und C9-Bestandteilen. Bei der Herstellung (Polymerisation) könne auch weitere Monomere beigemischt werden, wie zum Beispiel phenolische Komponenten. Des Weiteren können Kohlenwasserstoffharze voll- oder teilhydriert vorliegen. Prinzipiell sind alle Klebharze wie zum Beispiel Balsamharz, Terpenharze, Terpenphenolharze, aliphatische oder aromatische Kohlenwasserstoffharze, Inden-Cumaronharze und Mischungen davon zur Herstellung der erfindungsgemäßen Klebmasse geeignet.

In der vorliegenden Erfindung wird mindestens ein Klebharz eingesetzt, wobei bevorzugt eines der möglicherweise mehreren Klebharze aus der Gruppe der aromatischen Kohlenwasserstoffharze kommt. Besonders bevorzugt wird ein phenolisch-modifiziertes, aromatisches Kohlenwasserstoffharz verwendet. Ein geeignetes phenolisch-modifiziertes aromatisches Kohlenwasserstoffharz ist bekannt unter dem Namen Novares NTA 100. Ein oder mehrere weitere Klebharze können in der erfindungsgemäßen Klebmasse enthalten sein, beispielsweise ein hydriertes aliphatisches Kohlenwasserstoffharz.

Die Klebharzkombination eines phenolisch-modifizierten aromatischen Kohlenwasserstoffharzes und eines hydrierten aliphatischen Kohlenwasserstoffharzes ist bevorzugt.

Der Gehalt an Klebharz in der Klebmasse ist von 10 bis 90 %, oder von 20 bis 90 %, oder von 30 bis 80 % oder von 40 bis 70 % (Gewichtsanteil) der Klebmasse. Liegt neben dem Klebharz noch ein Weichharz vor, beziehen sich die vorgenannten Gewichtsanteile auf den Gehalt an Klebharz inklusive Weichharz in der Klebmasse. Die Erfinder haben herausgefunden, dass auf diese Weise eine Klebmasse mit besonders guten Adhäsionseigenschaften hergestellt werden kann, die sich besonders zur Verwendung in der Automobilindustrie eignet. Die Einsatztemperatur bei Verwendung in der Automobilindustrie liegt üblicherweise zwischen -40°C und +90°C. Deshalb sollte eine Klebmasse bzw ein Hafklebeband enthaltend diese Klebmasse für diese Verwendung auch bei +90°C noch eine ausreichende Scherfestigkeit aufweisen. Eine Klebmasse für ein derartiges Haftklebeband sollte deshalb eine SAFT-Temperatur (Shear adhesion failure temperature) von größer 100°C erreichen.

Zur Verbesserung der Eigenschaften in Hinblick auf Scherfestigkeit, Temperatur- und Lösemittelbeständigkeit und Wiederablösbarkeit der erfindungsgemäßen Klebmasse wird die synthetische Kautschukkomponente üblicherweise vernetzt. Als Vernetzungsmechanismen kommen dabei eine chemische Vernetzung (z.B. kovalente Verbindungen) oder eine physikalische Vernetzung (Domänenbildung) in Frage. Die Vernetzung kann durch thermische Einflüsse, z. B. beim Trockenprozess der lösemittelhaltigen Klebmasse, oder durch Strahlungseinflüsse (UV-Licht, Elektronenstrahlung) initiiert werden.

Die Vernetzung der Multiarm-Vinylaromaten-Blockcopolymere durch radikalbildende Elektronenstrahlen Radikale wird mit einem Vernetzungshilfsmittel gefördert. Die Multiarm-Vinylaromaten-Blockcopolymere werden durch Bestrahlung mit Elektronenstrahlung chemisch mit kovalenten Bindungen vernetzt.

In einer Ausführungsform der erfindungsgemäßen Klebmasse hat das Vernetzungshilfsmittel die allgemeine Formel R¹ₙ-C-X-R²ₘ wobei R¹ beliebige Kohlenwasserstoffketten darstellen und R² endständige Acrylatgruppen darstellen, die über eine Zwischenkette X an das zentrale Kohlenwasserstoffatom C gebunden sind, mit 2 ≤ m ≤ 4 und n = 4-m. Alternativ hat das Vernetzungshilfsmittel die allgemeine Formel R¹ₙR²ₘC-X-CR¹ₙR²ₘ wobei R1 beliebige Kohlenwasserstoffketten darstellen, R2 endständige Acrylatgruppen, welche über eine Zwischenkette an das C-Atom gebunden sind, darstellen und X eine weitere, beliebige Zwischenkette ist, welche die beiden C-Atome miteinander verknüpft, mit 1≤m≤3 und n=3-m.

Erfindungsgemäß enthalten die Vernetzungshilfsmittel mindestens zwei endständige Acrylatgruppen. Derartige Vernetzungshilfsmittel sind unter den Markennamen Sartomer von Fa. Arkema, Ebecryl von der Fa. Allnex, Laromer der Fa. BASF oder Miramer von der Fa. Miwon Commercial erhältlich, wobei das Sartomer-Monomer SR 351 (Trimethylolpropantriacrylat, TMPTA) besonders bevorzugt ist. Der Gehalt des Vernetzungshilfsmittels ist bevorzugt von 0,01 bis 10 % und besonders bevorzugt von 0,05 bis 5 % (Gewichtsanteil) der Klebmasse. Durch geeignete Vernetzung erhöht sich die Scherfestigkeit bei Temperaturen über Raumtemperatur. Dadurch verbessert sich die Temperaturbeständigkeit der Klebmassse, bzw., eines Haftklebebandes enthaltend die Klebmasse. Daneben wird die Beständigkeit gegenüber Chemikalien verbessert. Bei geeigneter Rezeptur kann dadurch auch die Wiederablösbarkeit der Klebmasse bzw. eines Haftklebebandes enthaltend die Klebmasse erreicht werden.

Neben den oben genannten Komponenten (d.h., Multiarm-Vinylaromaten-Blockcopolymer; mindestens ein Klebharz; und mindestens ein Vernetzungshilfsmittel) kann die erfindungsgemäße Klebmasse noch weitere Bestandteile enthalten. In einer bevorzugten Ausführungsform enthält die Klebmasse ein weiteres Klebharz und/oder Weichharz. Weitere Klebharze sind bevorzugt Balsamharz, Terpenharze, Terpenphenolharze, aliphatische oder aromatische Kohlenwasserstoffharze, Inden-Cumaronharze oder Mischungen davon. Bevorzugt handelt es sich bei dem mindestens einem weiteren Klebharz um ein Terpenphenolharz oder ein hydriertes aliphatisches Kohlenwasserstoffharz wie Regalite 1125. Durch Verwendung von mehr als einem Klebharz lassen sich die adhäsiven Eigenschaften der erfindungsgemäßen Klebmasse besonders gut einstellen.

Weichharze können verwendet werden, um die Klebmasse weicher zu machen. Weichharze sind nicht fest, sondern viskös, zum Beispiel sind Weichharze Öle. Bevorzugt werden als Weichharze hydrierte aliphatische Kohlenwasserstoffharze verwendet, wie zum Beispiel Regalite 1010. Der Gehalt an Weichharz ist etwa von 0 bis 40 %, bevorzugt jedoch von etwa 10 bis etwa 30 % (Gewichtsanteil) der Klebmasse.

Ein möglicher Nachteil bei der Verwendung von SBC-Klebmassen ist deren geringe Langzeitstabilität. Das ungesättigte Polymer ist für Oxidationsreaktionen anfällig, daher bedürfen ungesättigte Verbindungen eines Alterungsschutzes. Hinsichtlich der Alterungsschutzmittel ist grundsätzlich zwischen primären und sekundären Antioxidantien zu unterscheiden. Die primären Antioxidantien greifen kettenabbrechend in den Kettenfortpflanzungsschritt ein, während die sekundären oder präventiven Antioxidantien Hydroperoxidgruppen zerstören, welche Kettenstart oder Kettenverzweigung auslösen. Die Alterungsschutzmittel (Antioxidationsmittel, Antioxidantien) selbst sind organisch-chemische Substanzen, die einem Mischungsaufbau zugesetzt werden, um diesen vor Zersetzung, oxidativem Abbau, vorzeitiger Alterung und Autooxidation zu schützen. Solche Additive werden in nahezu sämtlichen Bereichen der chemischen und pharmazeutischen Industrie eingesetzt, um Chemikalien oder daraus hergestellte Erzeugnisse, Naturstoffe, Kunststoffe, Nahrungs- und Genussmittel, Arzneimittel und Kosmetika haltbarer zu machen. Eine Übersicht über gängige und im vorliegenden Zusammenhang prinzipiell auch verwendbare Antioxidantien findet sich z.B. in "Ullmanns Enzyklopädie der technischen Chemie", 4. Auflage, Band 8, Seite 25 bis 42 (1974). Für den Einsatz in der erfindungsgemäßen Klebmasse können alle Alterungsschutzmittel verwendet werden, zum Beispiel aus der Gruppe der Kresole, hier insbesondere 4,6-Bis(alkylthioalkyl)-o- Kresole, oder Irganox ^{®} 1726, Irganox ^{®} 1010 oder Irganox ^{®} 1520, aber auch sonstige Alterungsschutzmittel auf Basis von Phenolen wie Vulkanox ^{®} BFK oder auch sonstige gängige Alterungsschutzmittel wie DOP (Dioctylphthalate) sind verwendbar.

Des Weiteren kann die erfindungsgemäße Klebmasse ein UV-Schutzmittel enthalten, insbesondere für Außenanwendungen. Als geeignete UV-Schutzmittel seien bespielhaft Hydroxyphenylbenzotriazole genannt, die unter dem Markennamen Tinuvin^{®} vertrieben werden. Der Gehalt an Alterungsschutzmittel und/oder UV-Schutzmittel liegt typischerweise zwischen 0,01 und 10 %, oder zwischen 0,05 bis 5 % (Gewichtsanteil) der erfindungsgemäßen Klebmasse.

Darüber hinaus können je nach beabsichtigtem Effekt beispielsweise zur Farbgebung oder auch als Entschäumungsmittel die üblicherweise bei der Herstellung von Haftklebstoffen zu findenden Zusätze wie Füllstoffe, Weichmacher, Verarbeitungshilfsmittel, Aktivatoren, Pigmente, Beschleuniger oder Verzögerer usw. eingesetzt werden.

Die erfindungsgemäßen Klebmassen zeichnen sich durch hohe Adhäsionswerte, hohe Festigkeit und hohe Dauerbeständigkeit aus. Nach Verklebung wird die Festigkeit der erfindungsgemäßen Klebmassen rasch innerhalb von Minuten aufgebaut.

Mit der erfindungsgemäßen Klebmasse kann ein Haftklebemittel hergestellt werden. Ein mit der erfindungsgemäßen Klebmasse hergestelltes Haftklebemittel kann als trägerbasiertes, ein- oder doppelseitig haftklebend ausgerüstetes oder auch als trägerloses Haftklebemittel vorliegen, mit oder ohne Abdeckung.

Für trägerbasierte Haftklebemittel eignet sich als Trägermaterial jedes Material, das die Klebemasse tragen kann. Das Trägermaterial kann dabei aus jedem der bekannten Klebeband-Trägermaterialien ausgewählt werden, also beispielsweise Papier, Folien, metallisierten Folien, Schaum, Gewebe, viskoelastischen Materialien und Kombinationen dieser genannten Materialien. Besonders geeignete Trägermaterialien sind Schäume aus PE, PP, PB, PIB, PU, PVC, EVA, EPDM, Polystyrol oder Polyacrylat. Das Trägermaterial enthält vorzugsweise ein flexibles, elastisches Material, das vorzugsweise komprimierbar ist. Besonders bevorzugt ist das Trägermaterial ein thermoplastischer Schaumträger, der Polyethylen, Polyethylenvinylacetat, Polyurethan oder Mischungen daraus enthält.

Je nach gewünschter Weichheit, Elastizität und Festigkeit weist das Trägermaterial ein geeignetes Raumgewicht und eine geeignete Dicke auf. Das Raumgewicht des Trägermaterials der erfindungsgemäßen Haftklebemittel ist üblicherweise von etwa 50 bis 900 kg/m³. Vorzugsweise weist das Trägermaterial ein Raumgewicht auf, das sich im Bereich von etwa 60 bis 500 kg/m³, 70 bis 400 kg/m³, 80 bis 250 kg/m³ oder etwa 100 bis 200 kg/m³ bewegt. Ganz besonders vorzugsweise ist das Raumgewicht des Trägermaterials etwa 125 kg/m³. Das Trägermaterial kann jede beliebige Dicke annehmen, üblich für den Einsatz von Verklebungen von Teilen auf Automobillacke ist eine Dicke von etwa 0,2 bis 20 mm, oder von etwa 0,2 bis 10 mm, oder von etwa 0,4 bis 0,8 mm, bevorzugt von etwa 0,65 mm. Das Trägermaterial kann prinzipiell in beliebiger Form vorliegen, es nimmt jedoch vorzugsweise die Form eines Rechtecks, Kreises oder Bands an.

Zur schützenden Abdeckung des Haftklebemittels vor dessen Gebrauch können die allseits für solche Zwecke bekannten Papiere sowie kunststoff- oder gewebebasierten Materialien Verwendung finden, bei Bedarf jeweils beschichtet mit einer die Ablösbarkeit von der Klebfläche fördernden Substanz wie z. B. Polyvinylalkohol oder Silikonen. Vorzugsweise ist die Abdeckung jedoch eine silikonisierte oder unsilikonisierte Folie. Die Folie enthält dabei bevorzugt Polyester, Polypropylen und/oder Polyethylenterephthalat. Vorzugsweise wird die Abdeckung mit einer für die Ablösbarkeit förderliche Substanz wie Polyvinylalkohol und/oder Silikon beschichtet. Die Abdeckung kann auch eine mehrlagige Folie umfassen, welche die vorgenannten Materialien enthält.

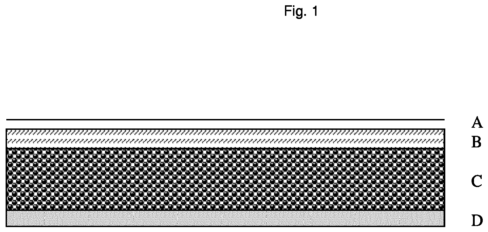

Das Haftklebemittel kann ein- oder doppelseitig klebend vorliegen. Vorzugsweise ist das erfindungsgemäße Haftklebemittel doppelseitig klebend (siehe Figur 1). Die erfindungsgemäße Klebmasse befindet sich dabei auf der ersten Seite (siehe Figur 1 B) und vorzugsweise zusätzlich auch auf der zweiten Seite des Haftklebemittels. Alternativ befindet sich die erfindungsgemäße Klebmasse nur auf der ersten Seite des Haftklebemittels. Auf der zweiten Seite des Haftklebemittels befindet sich in diesem Fall ein anderer Klebstoff (siehe Figur 1 D). Vorzugsweise handelt es sich bei diesem anderen Klebstoff um einen Acrylat-Klebstoff. Die erste Seite und die zweite Seite können mit einer Abdeckung versehen sein (siehe Figur 1 A), damit das Haftklebemittel geschützt ist, insbesondere vor Staub und Schmutz.

Wenn das Haftklebemittel auf ein Band aufgerollt werden soll, so kann auch eine Seite des Haftklebemittels offen bleiben (also ohne Abdeckung). Durch das Aufrollen kann dann die Abdeckung der einen Seite des Klebebands auch die andere Seite des Klebebands abdecken. Vorzugsweise ist die Abdeckung derart gestaltet, dass beim Abrollen des Bandes die Abdeckung auf der ersten Seite des Haftklebemittels verbleibt, auf der sich die erfindungsgemäße Klebmasse befindet und sich dabei zugleich von der zweiten Seite mit dem anderen Klebstoff ablöst. Vorzugsweise kann bei der Verwendung des Haftklebemittels die erste Seite mit der Lackoberfläche und die zweite Seite mit einem Anbauteil verklebt werden. Durch das Beschichten des Haftklebemittels mit zwei unterschiedlichen Klebstoffen kann das Haftklebemittel besonders gut an die zu verklebenden Materialien angepasst werden.

Vorzugsweise ist das Haftklebemittel ein Klebeband in Form eines Bogens, einer Rolle oder eines Stanzteils. Im Prinzip kann jedoch das Haftklebemittel jede beliebige Form annehmen, die im jeweiligen Einsatzgebiet benötigt wird.

Bei der Herstellung des erfindungsgemäßen Haftklebemittels werden in einem Schritt (a) das mindestens eine Multiarm-Vinylaromaten-Blockcopolymer mit mindestens einem Klebharz und mindestens einem Vernetzungshilfsmittel vermischt. In einer bevorzugten Ausführungsform wird in diesem Schritt ein Lösungsmittel hinzugefügt. Alternativ wird in dem genannten Schritt kein Lösungsmittel hinzugefügt. Durch Hinzufügen eines Lösungsmittels können die Bestandteile der Klebmasse besonders gut vermischt werden. Andererseits kann durch das Durchführen des Verfahrens ohne Lösungsmittel eine besonders gute Umweltverträglichkeit erreicht werden.

Im bevorzugten Lösemittelverfahren in organischen Lösungsmitteln werden die Komponenten der Klebmasse mittels eines Rührers innig vermischt. Dabei kommen vorzugsweise Flügelrührer, Leitstrahlmischer, Dissolver und/oder statische Mischer zum Einsatz.

In einem weiteren Schritt (b) wird das Klebemasse-Produkt aus Schritt (a) auf einem Trägermaterial und/oder einer Abdeckung aufgetragen. Die Klebmasse wird vorzugsweise in einem Beschichtungsprozess auf der Abdeckung oder auf dem Trägermaterial aufgetragen. Die Beschichtung kann durch eine der allseits bekannten Herstellungsmethoden erfolgen, also z.B. mittels Rakelbeschichtung, Walzenbeschichtung oder Düsenauftrag. Die Beschichtung kann auch im 100%-System durchgeführt werden (Hotmelt). In diesem Fall werden die Komponenten der Klebmasse ohne Lösungsmittel in der Schmelze oder im Extruder gemischt und vorzugsweise durch eine Düse bei hohen Temperaturen aufgetragen. Die Klebmasse kann nach dem Beschichten dann aktiv getrocknet werden, zum Beispiel durch warme Luft.

Danach wird die aufgetragene Klebmasse in einem dritten Schritt (c) mit Elektronenstrahlen bestrahlt. Die Elektronenstrahlen dienen der chemischen Vernetzung der Klebmasse. Dabei kann die Bestrahlung entweder direkt oder durch die Abdeckung hindurch durchgeführt werden. Um Nebenreaktionen und Effizienzverluste zu vermeiden wird die Bestrahlung üblicherweise unter Inertatmosphäre (Stickstoff) durchgeführt. Dabei werden Elektronenstrahlen mit einer Energie von 50 bis 400 keV und einer Dosis von 20 bis 400 kGy eingesetzt. Zum Beispiel beträgt die Beschleunigungsspannung zwischen 80 und 300 kV, oder zwischen 90 und 200 kV oder zwischen 100 und 150 kV. Bevorzugt beträgt die Beschleunigungsspannung etwa 180 kV. Die Dosis der Elektronenstrahlen beträgt dabei 30 bis 300 kGy (kiloGray), 40 bis 200 kGy oder 50 bis 100 kGy. Vorzugsweise beträgt die Dosis etwa 60 kGy.

Die Erfinder haben festgestellt, dass durch die chemische Vernetzung durch Elektronenstrahlen eine "vernetzte" Klebmasse und damit ein "vernetztes" Haftklebemittel hergestellt werden kann, das eine gute Adhäsion auch auf üblicherweise schwierig zu verklebenden Untergründen kombiniert mit einer hohen Kohäsion und Temperaturbeständigkeit, wie sie gerade im Automobilbau benötigt wird. Durch geeignete Vernetzung kann auch die Schäl- und Scherfestigkeit, Lösemittelbeständigkeit und/oder die Wiederablösbarkeit der Klebmasse erhöht werden. Mit dem erfindungsgemäßen Haftklebemittel lassen sich demnach SAFT-Werte von mehr als 100°C erreichen.

Es hat sich gezeigt, dass die erfindungsgemäße Klebmasse und die erfindungsgemäßen Haftklebemittel besonders gut zur Verklebung auf Lackoberflächen geeinigt sind, insbesondere auch auf solche Lackoberflächen, die nur eine niedrige Oberflächenenergie und/oder superhydrophobe Eigenschaften aufweisen, was gerade auf neuartige Lacke in der Automobilindustrie zutrifft.

### Figurenbeschreibung

Das Haftklebemittel wird nachfolgend anhand einer Figur 1 näher erläutert, ohne sich durch diese beispielhafte Darstellung in der erfindungsgemäßen Lehre beschränken zu wollen. Figur 1 zeigt ein erfindungsgemäßes Haftklebemittel mit Abdeckung (A), Klebmasse (B), Trägermaterial (C) und Klebstoff (D).

Bei den unten genannten Herstellungsbeispielen wurden folgende Testmethoden zur Validierung eingesetzt. "Teile" bezieht sich immer auf Gewichtsteile.

### Bestimmung des Gelwertes:

Vom Transferfilm (s. Beispiele) werden ca. 0,2 g eingewogen und in einen verschließbaren Glaskolben gegeben. Es werden 50 mL Toluol hinzugefügt und umgerührt. Die Mischung wird 2 Tage bei Raumtemperatur stehen lassen. Dabei quillt der vernetzte Teil auf, der unvernetzte Teil löst sich im Toluol. Nach 2 Tagen wird durch ein Nylon-Filter (50µm Nylon-Filter, Eaton Sentinel NMO-50-PO1Z-60L) abfiltriert. Das Gewicht des Filters wird zuvor bestimmt. Nach der Filtration wird mit reichlich Toluol nachgespült. Der Filterrückstand wird bei 110°C für 4 h getrocknet. Danach wird Filter und Rückstand ausgewogen. Der Gelwert errechnet sich aus dem Quotienten aus Filterrückstand und Einwaage. Der Messwert ist der Mittelwert aus 3 Einzelmessungen.

### SAFT-Prüfuna:

Zur Messung der SAFT (Shear adhesion failure temperature) wird ebenfalls der Transferfilm eingesetzt. Dieser wird auf eine geätzte Polyesterfolie (Dicke von 50µm) laminiert. Daraufhin werden daraus Probestreifen (Breite 25 mm) geschnitten. Auf einer Edelstahlplatte (Edelstahl nach Afera-Norm 4001, zuvor gereinigt mit Benzin) wird der Probestreifen vom Plattenrand so verklebt, dass eine Fläche von 25 mm x 25 mm verklebt ist. Anschließend wird mit einer Rolle (Gewicht 5kg) zweimal über den Probestreifen gerollt (5 m/min). Der Probestreifen wird 10 min aufziehen lassen, mit 1 kg vertikal belastet (Scherbelastung), und diese Anordnung in einen Umluftofen gehängt. Ein Temperaturprogramm variiert die Temperatur von 30°C auf 200°C mit einer Aufheizrate von 2K/min. Das Testergebnis ist die Temperatur, bei der der Klebestreifen abfällt. Durch die Abscherung der Klebmasse entsteht ein kohäsiver Bruch. Der Messwert ist der Mittelwert aus 3 Einzelmessungen.

### Schälfestiakeit 90°

Die Messung der 90°-Schälfestigkeit wird mit dem Schaumklebeband (s. Beispiele) durchgeführt. Sie geschieht in Anlehnung an DIN ISO 1939 bei Normklima (23°C, 50% rel. Luftfeuchtigkeit). Das Substrat (Alublech mit 3-schichtigem Lackaufbau: Füller, Basislack und als Klarlack: 2K-Klarlack ApO 1.2 der Fa. PPG) wird mit einem benzingetränkten Tuch abgewischt und abdampfen lassen. Ein Probenstreifen der Breite 25 mm wird auf das Substrat aufgebracht. Die klebende Rückseite wird mit geätzter Polyesterfolie (Dicke 50µm) abgedeckt. Anschließend wird mit einer Rolle (Gewicht 5kg) zweimal über den Probestreifen gerollt (5 m/min). Der Prüfling wird 10 min bzw. 24 Stunden bei Normklima (23°C, 50% Luftfeuchtigkeit) konditioniert und anschließend wird die Kraft gemessen, die bei einem Abzugswinkel von 90° bei einer Geschwindigkeit von 100 mm/min aufgewendet werden muss, um das Klebeband vom Substrat abzulösen. Bei einem Klebeband mit Schaumträger kann die Haftung der Klebmasse auf dem Substrat so hoch sein, dass sie größer ist, als die innere Festigkeit des Schaumträgers. Dann tritt ein Schaumspalten ein. Als weitere Bruchbilder kommen Kohäsionsbruch und Normalbruch mit Rückständen auf dem Substrat vor. Der Messwert ist der Mittelwert aus 3 Messungen.

### Scherfestigkeit bei 23°C/4h

Zur Messung dieser Scherfestigkeit wird ebenfalls das Schaumklebeband verwendet (s. Beispiele). Der Klebebandstreifen der Breite 25 mm wird wie bei der SAFT-Prüfung auf Edelstahl vorbereitet. Der Prüfling wird bei Normklima (23°C, 50% relative Luftfeuchte) vertikal hängend mit verschiedenen Gewichten belastet. Nach 4 Stunden wird kontrolliert, ob die Anordnung hält oder ob der Klebestreifen abgeschert ist. Der Wert für die Scherfestigkeit ist dann dasjenige Gewicht (in N), bei dem der Streifen gerade noch gehalten hat. Es wird in Schritten von 10N abgeprüft. Der Messwert ist der Mittelwert aus 3 Einzelmessungen.

### Scherfestigkeit bei 70°C

Zur Messung dieser Scherfestigkeit wird der gleiche Prüfling verwendet wie bei der Scherfestigkeit 23°C. Der Prüfling wird in einem Umluftofen bei 70°C vertikal hängend mit einem Gewicht von 500g belastet. Es wird die Zeit gemessen in Stunden, bis der Streifen abschert und abfällt. Der Messwert ist der Median aus 3 Einzelmessungen.

### Beispiele:

### Beispiel 1 (B1):

33 Teile des Styrolblockcopolymers Kraton HT 1200 (Multiarm Styrolblockcopolymer, Verzweigung mehr als 10 Arme, sternförmig, Fa. Kraton Polymers) wurden in 300 Teilen eines Lösemittelgemisches aus Benzin und Methylethylketon (80:20) gelöst. Hinzu gegeben wurden 24,5 Teile Novares NTA 100 (phenolisch modifiziertes aromatisches Kohlenwasserstoffharz), 20,5 Teile Regalite 1125 (hydriertes aliphatisches Kohlenwasserstoffharz, Klebharz) und 20,5 Teile Regalite 1010 (hydriertes aliphatisches Kohlenwasserstoffharz, Weichharz, beide Fa. Eastman). Als weitere Bestandteile wurden 0,5 Teile Sartomer SR 351 (TMPTA, Vernetzer, Fa. Arkema) und 0,5 Teile Irganox 1010 (phenolisches Antioxidationsmittel, Alterungsschutzmittel, Fa. BASF) hinzugegeben. Die Mischung wurde bis zur Homogenität gerührt. Die so entstandene Lösemittel-Klebmasse wurde mittels Stahlrakel auf eine silikonisierte Polyesterfolie (Dicke 50µm) ausgestrichen, zunächst bei Raumtemperatur für 10 Minuten und dann im Umluftofen für 5 min bei 110°C getrocknet. Die Strichdicke wurde so gewählt, dass das Auftragsgewicht nach dem Trocknen 90g/m² beträgt. Der Klebefilm wurde mit einer weiteren silikonisierten Polyesterfolie (Dicke 50µm abgedeckt) und in einer Stickstoffatmosphäre einer Elektronenbestrahlung unterzogen (180kV, 60 kGy). Man erhielt so einen Transferfilm. Zur Herstellung des erfindungsgemäßen Klebebandes wurde der Transferfilm beidseitig auf einen Trägerschaum laminiert. Der Trägerschaum (schwarzer, geschlossenzelliger Polyethylenschaum, Fa. Alveo, Typ TMA, Raumgewicht 125kg/m³, Dicke 0,65 mm) wurde zunächst mit Corona-Bestrahlung beidseitig vorbehandelt. Dann wurde der Transferfilm auf beiden Seiten so auflaminiert, dass die Klebmasseschichten auf den Schaum übertragen wurden.

### Vergleichsbeispiel 1 (VB1):

Wie Beispiel 1, aber ohne Zugabe von Sartomer SR 351.

### Vergleichsbeispiel 2 (VB2):

Wie Beispiel 1, aber ohne Elektronenbestrahlung.

### Vergleichsbeispiel 3 (VB3):

Wie Beispiel 1, aber als Styrolblockcopolymer wurde ein lineares SIS (Kraton D 1161) eingesetzt.

### Vergleichsbeispiel 4 (VB4):

Wie Beispiel 1, aber als Styrolblockcopolymer wurde ein lineares SBS (Kraton D 1101) eingesetzt.

### Vergleichsbeispiel 5 (VB5):

Wie Beispiel 1, aber als Styrolblockcopolymer wurde ein lineares SEBS (Kraton G 1657) eingesetzt.

### Vergleichsbeispiel 6 (VB6):

Wie Beispiel 1, aber als Styrolblockcopolymer wurde ein radiales SIS mit ca. 4 Armen eingesetzt (Kraton D 1124).

### Vergleichsbeispiel 7 (VB7):

Wie Beispiel 1, aber als Styrolblockcopolymer wurde ein radiales, circa vierarmiges SIS eingesetzt (Vector 4187 A der Fa. Dexco, ca. 78% Diblockanteil).

### Vergleichsbeispiel 8 (VB8):

Wie Beispiel 1, aber als Styrolblockcopolymer wurde ein weiteres radiales, circa vierarmiges SIS eingesetzt (Vector 4230 A der Fa. Dexco, ca. 30% Diblockanteil).

### Beispiel 9 (B9):

Wie Beispiel 1, aber statt Sartomer SR 351 wurde Miramer M 200 (Hexamethylendiacrylat) der Fa. Miwon Commercial in der gleichen Konzentration als Vernetzer eingesetzt.

### Beispiel 10 (B10):

Wie Beispiel 1, aber statt Sartomer SR 351 wurde Laromer TPGDA (Tripropylenglycoldiacrylat) der Fa. BASF in der gleichen Konzentration als Vernetzer eingesetzt.

### Beispiel 11 (B10):

Wie Beispiel 1, aber statt Sartomer SR 351 wurde Ebecryl 40 (Polyoltetraacrylat) von der Fa. Allnex in der gleichen Konzentration als Vernetzer eingesetzt.
a) Gelwerte (vernetzer Anteil) und SAFT-Werte (Shear adhesion failure temperature)

| | B1 | | VB1 | | VB2 | | | VB3 | | VB4 | |
|---|---|---|---|---|---|---|---|---|---|---|---|
| Gelwert in % | 33 | | ca. 0 | | ca. 0 | | | ca. 0 | | ca. 0 | |
| SAFT in °C | 122 | | 77 | | 72 | | | 85 | | 82 | |
| | | | | | | | | | | | |

| | VB5 | VB6 | | VB7 | | VB8 | B9 | | B10 | | B11 |
|---|---|---|---|---|---|---|---|---|---|---|---|
| Gelwert in % | ca. 0 | ca. 0 | | ca. 0 | | ca. 0 | 35 | | 38 | | 37 |
| SAFT in °C | 77 | 84 | | 77 | | 77 | 117 | | 116 | | 127 |

b) Schälfestigkeiten und Scherfestigkeiten

| | B1 | VB1 | VB2 |
|---|---|---|---|
| Schälfestigkeit 90° nach 10min | 15 N/cm | 14 N/cm | 15 N/cm |
| Schälfestigkeit 90° nach 24h | 20 N/cm | 20 N/cm | 20 N/cm |
| Scherfestigkeit bei 23°C/4h | 180 N | 180 N | 180 N |
| Scherfestigkeit bei 70°C (500g, 625mm²) | > 360 h | 1h | < 1h |

Tabelle a) zeigt, dass nur die erfindungsgemäße Klebemasse nach Bsp. 1 mit Elektronenstrahlen vernetzt werden konnte und damit einen signifikanten Gelanteil und erhöhten SAFT-Wert ergab. Mischungen mit Blockcopolymeren mit weniger Seitenarmen konnten ebenfalls nicht vernetzt werden (VB3 bis VB8). Als Vernetzungshilfsmittel können neben dem Sartomer SR 351 auch andere mehrfunktionelle, endständige Acrylatmonomere eingesetzt werden (VB9 bis VB11).

Tabelle b) zeigt, dass nur erfindungsgemäße Klebemassen zu Haftklebemitteln führen, die sowohl gute Schälfestigkeiten als auch gute Scherfestigkeiten bei erhöhten Temperaturen zeigen.

## Patentansprüche

1. Klebmasse enthaltend:
- mindestens ein Multiarm-Vinylaromaten-Blockcopolymer, wobei das Multiarm-Vinylaromaten-Blockcopolymer mehr als 10 Seitenarme enthält;
- mindestens ein Klebharz;
- mindestens ein Vernetzungshilfsmittel, wobei das Vernetzungshilfsmittel Diacrylatmonomer, Triacrylatmonomer, Tetraacrylatmonomer oder ein höherzahliges Acrylatmonomer, und bevorzugt ein Trimethylolpropantriacrylat ist; und
- ein Alterungsschutzmittel und/oder ein UV-Schutzmittel.

2. Die Klebmasse nach Anspruch 1, **dadurch gekennzeichnet, dass** es sich bei dem Multiarm-Vinylaromaten-Blockcopolymer um ein Elastomer aus der Gruppe der Styrol-Blockcopolymere (SBC) handelt, bevorzugt aus der Gruppe der Styrol-Isopren-Blockcopolymere (SIB), der Styrol-Butadien-Blockcopolymere (SBB) oder der Styrol-Ethylen-Butylen-Blockcopolymere (SEBS) und/oder einem Hydrierungsprodukt dieser Blockcopolymere.

3. Die Klebmasse nach einem der vorherigen Ansprüche, **dadurch gekennzeichnet, dass** mindestens ein Klebharz ein aromatisches Kohlenwasserstoffharz ist, bevorzugt ein phenolisch-modifiziertes aromatisches Kohlenwasserstoffharz.

4. Die Klebmasse nach einem der vorherigen Ansprüche, **dadurch gekennzeichnet, dass** das Vernetzungshilfsmittel eine allgemeine Formel hat ausgewählt aus
a) R¹ₙ-C-X-R²ₘ, wobei R¹ beliebige Kohlenwasserstoffketten darstellen und R² endständige Acrylatgruppen darstellen, die über eine Zwischenkette X an das zentrale Kohlenwasserstoffatom C gebunden sind, mit 2 ≤ m ≤ 4 und n = 4 - m, oder
b) R¹ₙR²ₘC-X-CR¹ₙR²ₘ, wobei R1 beliebige Kohlenwasserstoffketten darstellen, R2 endständige Acrylatgruppen, die über eine Zwischenkette an das C-Atom gebunden sind, darstellen und X eine weitere, beliebige Zwischenkette ist, die die beiden C-Atome miteinander verknüpft, mit 1≤m≤3 und n=3-m.

5. Die Klebmasse nach einem der vorherigen Ansprüche, **dadurch gekennzeichnet, dass** die Klebmasse mindestens ein weiteres Klebharz und/oder Weichharz enthält.

6. Die Klebmasse nach einem der vorherigen Ansprüche enthaltend 10-80 % eines Multiarm-Vinylaromaten-Blockcopolymeren mit mehr als 10 Seitenarmen, 20-90 % mindestens eines Klebharzes und eines Weichharzes,
0,05-5 % eines Vernetzungshilfsmittels und
0,05-5 % weiterer Additive wie Alterungsschutzmittel und/oder UV-Schutzmittel,
wobei sich die Prozentsätze zu 100 addieren.

7. Die Klebmasse nach einem der vorherigen Ansprüche, die mit Elektronenstrahlen bestrahlt wurde.

8. Haftklebemittel enthaltend:
- eine Klebmasse nach einem der Ansprüche 1 bis 6; und
- ein Trägermaterial und/oder eine Abdeckung.

9. Das Haftklebemittel nach Anspruch 8, **dadurch gekennzeichnet, dass** das Trägermaterial ein thermoplastischer Schaumträger ist, der Polyethylen, Polyethylenvinylacetat, Polyurethan oder Mischungen daraus enthält.

10. Das Haftklebemittel nach Anspruch 8 oder 9, **dadurch gekennzeichnet, dass** das Trägermaterial ein thermoplastischer Schaumträger ist, der ein Raumgewicht von mehr als 50 kg/m³ aufweist.

11. Das Haftklebemittel nach einem der Ansprüche 8 bis 10, **dadurch gekennzeichnet, dass** die Abdeckung eine silikonisierte oder unsilikonisierte Folie ist, die Polyester, Polyethylen, Polypropylen und/oder Polyethylenterephthalat enthält.

12. Das Haftklebemittel nach einem der Ansprüche 8 bis 11, **dadurch gekennzeichnet, dass** eine erste und eine zweite Seite des Haftklebemittels klebend ist, wobei sich die Klebmasse nach einem der Ansprüche 1 bis 5 zumindest auf der ersten Seite befindet.

13. Haftklebemittel erhältlich aus einer Klebmasse nach einem der Ansprüche 1 bis 6 oder aus einem Haftklebemittel nach einem der Ansprüche 8 bis 12 durch Bestrahlen mit Elektronenstrahlen.

14. Verfahren zur Herstellung eines Haftklebemittels, **dadurch gekennzeichnet, dass** es die folgenden Schritte enthält:
(a) Vermischen mindestens eines Multiarm-Vinylaromaten-Blockcopolymers, wobei das Multiarm-Vinylaromaten-Blockcopolymer mehr als 10 Seitenarme enthält, mit mindestens einem Klebharz und mindestens einem Vernetzungsmittel, wobei das Vernetzungshilfsmittel Diacrylatmonomer, Triacrylatmonomer, Tetraacrylatmonomer oder ein höherzahliges Acrylatmonomer, und bevorzugt ein Trimethylolpropantriacrylat ist, sowie einem Alterungsschutzmittel und/oder einem UV-Schutzmittel, wobei ein Lösungsmittel oder kein Lösungsmittel hinzugefügt wird;
(b) Auftragen des Produkts aus Schritt (a) auf ein Trägermaterial und/oder eine Abdeckung; und
(c) Bestrahlen des Produkts aus Schritt (b) mit Elektronenstrahlen.

15. Verwendung der Klebmasse nach einem der Ansprüche 1 bis 7 oder des Haftklebemittels nach einem der Ansprüche 8 bis 12, oder 13 zur Verklebung auf Lackoberflächen, bevorzugt zur Verklebung auf Decklacken in der Automobilindustrie.

## Claims

1. Adhesive compound containing:
- at least one multi-arm vinyl aromatic block copolymer, wherein the multi-arm vinyl aromatic block copolymer contains more than 10 side arms;
- at least one adhesive resin;
- at least one auxiliary crosslinking agent, wherein the auxiliary crosslinking agent is a diacrylate monomer, triacrylate monomer, tetraacrylate monomer or a higher-numbered acrylate monomer, preferably a trimethylolpropane triacrylate; and
- an anti-aging agent and/or a UV protection agent.

2. Adhesive compound according to claim 1, **characterized in that** the multi-arm vinyl aromatic block copolymer is an elastomer from the group of styrene block copolymers (SBC), preferably from the group of styrene-isoprene block copolymers (SIB), styrenebutadiene block copolymers (SBB) or styrene-ethylene-butylene block copolymers (SEBS) and/or a hydrogenation product of these block copolymers.

3. Adhesive compound according to either of the preceding claims, **characterized in that** at least one adhesive resin is an aromatic hydrocarbon resin, preferably a phenolic-modified aromatic hydrocarbon resin.

4. Adhesive compound according to any of the preceding claims, **characterized in that** the auxiliary crosslinking agent has a general formula selected from
a) R¹ₙ-C-X-R²ₘ, where R¹ represents any hydrocarbon chains and R² represents terminal acrylate groups which are bonded to the central hydrocarbon atom C via an intermediate chain X, where 2 ≤ m ≤ 4 and n = 4-m, or
b) R¹ₙR²ₘC-X-CR¹ₙR²ₘ, where R1 represents any hydrocarbon chains, R2 represents terminal acrylate groups which are bonded to the C atom via an intermediate chain and X is any further intermediate chain which links the two C atoms to one another, where 1 ≤ m ≤ 3 and n=3-m.

5. Adhesive compound according to any of the preceding claims, **characterized in that** the adhesive compound contains at least one further adhesive resin and/or soft resin.

6. Adhesive compound according to any of the preceding claims, containing 10-80% of a multi-arm vinyl aromatic block copolymer having more than 10 side arms, 20-90% of at least one adhesive resin and a soft resin,
0.05-5% of an auxiliary crosslinking agent and
0.05-5% of further additives such as anti-aging agents and/or UV protection agents, with the percentages adding up to 100.

7. Adhesive compound according to any of the preceding claims, which has been irradiated with electron beams.

8. Pressure-sensitive adhesive means containing:
- an adhesive compound according to any of claims 1 to 6; and
- a carrier material and/or a cover.

9. Pressure-sensitive adhesive means according to claim 8, **characterized in that** the carrier material is a thermoplastic foam carrier which contains polyethylene, polyethylene vinyl acetate, polyurethane or mixtures thereof.

10. Pressure-sensitive adhesive means according to either claim 8 or claim 9, **characterized in that** the carrier material is a thermoplastic foam carrier which has a density of more than 50 kg/m³.

11. Pressure-sensitive adhesive means according to any of claims 8 to 10, **characterized in that** the cover is a siliconized or non-siliconized film which contains polyester, polyethylene, polypropylene and/or polyethylene terephthalate.

12. Pressure-sensitive adhesive means according to any of claims 8 to 11, **characterized in that** a first side and a second side of the pressure-sensitive adhesive means are adhesive, the adhesive compound according to any of claims 1 to 5 being at least on the first side.

13. Pressure-sensitive adhesive means that can be obtained from an adhesive compound according to any of claims 1 to 6 or from a pressure-sensitive adhesive means according to any of claims 8 to 12 by irradiation with electron beams.

14. Method for producing a pressure-sensitive adhesive means, **characterized in that** it contains the following steps:
(a) mixing at least one multi-arm vinyl aromatic block copolymer, the multi-arm vinyl aromatic block copolymer containing more than 10 side arms, with at least one adhesive resin and at least one crosslinking agent, the auxiliary crosslinking agent being a diacrylate monomer, triacrylate monomer, tetraacrylate monomer or a higher-numbered acrylate monomer, preferably a trimethylolpropane triacrylate, and an anti-aging agent and/or a UV protection agent, a solvent or no solvent being added;
(b) applying the product from step (a) to a carrier material and/or a cover; and
(c) irradiating the product from step (b) with electron beams.

15. Use of the adhesive compound according to any of claims 1 to 7, the pressure-sensitive adhesive means according to any of claims 8 to 12 or the pressure-sensitive adhesive means according to claim 13 for bonding to painted surfaces, preferably for bonding to topcoats in the automotive industry.

## Revendications

1. Adhésif contenant :
- au moins un copolymère à blocs vinylaromatique multibras, le copolymère à blocs vinylaromatique multibras contenant plus de 10 bras latéraux ;
- au moins une résine adhésive ;
- au moins un auxiliaire de réticulation, l'auxiliaire de réticulation étant un monomère diacrylate, un monomère triacrylate, un monomère tétraacrylate ou un monomère acrylate de nombre supérieur, et de préférence un triacrylate de triméthylolpropane ; et
- un agent anti-vieillissement et/ou un agent de protection contre les UV.

2. Adhésif selon la revendication 1, **caractérisé en ce que** le copolymère à blocs vinylaromatique multibras est un élastomère du groupe des copolymères à blocs de styrène (SBC), de préférence du groupe des copolymères à blocs de styrène-isoprène (SIB), des copolymères à blocs de styrène-butadiène (SBB) ou des copolymères à blocs de styrène-éthylène-butylène (SEBS) et/ou d'un produit d'hydrogénation desdits copolymères à blocs.

3. Adhésif selon l'une des revendications précédentes, **caractérisé en ce qu'**au moins une résine adhésive est une résine hydrocarbonée aromatique, de préférence une résine hydrocarbonée aromatique modifiée phénoliquement.

4. Adhésif selon l'une des revendications précédentes, **caractérisé en ce que** l'auxiliaire de réticulation présente une formule générale choisie parmi
a) R¹ₙ-C-X-R²ₘ, où R¹ représente n'importe quelle chaîne hydrocarbonée et R² représente des groupes acrylate terminaux qui sont liés à l'atome d'hydrocarbure central C par l'intermédiaire d'une chaîne intermédiaire X, avec 2 ≤ m ≤ 4 et n = 4 - m, ou
b) R¹ₙR²ₘC-X-CR¹ₙR²ₘ, où R1 représente n'importe quelle chaîne hydrocarbonée, R2 représente des groupes acrylate terminaux liés à l'atome C par l'intermédiaire d'une chaîne intermédiaire et X représente n'importe quelle autre chaîne intermédiaire, qui lie les deux atomes C ensemble, avec 1 ≤ m ≤ 3 et n = 3 - m.

5. Adhésif selon l'une des revendications précédentes, **caractérisé en ce que** l'adhésif contient au moins une autre résine adhésive et/ou résine molle.

6. Adhésif selon l'une des revendications précédentes, contenant
10 à 80 % d'un copolymère à blocs vinylaromatique multibras comportant plus de 10 bras latéraux,
20 à 90 % d'au moins une résine adhésive et une résine molle,
0,05 à 5 % d'un auxiliaire de réticulation et
0,05 à 5 % d'autres additifs tels que des agents anti-vieillissement et/ou des agents de protection contre les UV, les pourcentages s'additionnant pour donner 100 %.

7. Adhésif selon l'une des revendications précédentes qui a été irradié avec des faisceaux d'électrons.

8. Adhésif sensible à la pression contenant :
- un adhésif selon l'une des revendications 1 à 6 ; et
- un matériau de support et/ou un revêtement.

9. Adhésif sensible à la pression selon la revendication 8, **caractérisé en ce que** le matériau de support est un support en mousse thermoplastique qui contient du polyéthylène, du polyéthylène acétate de vinyle, du polyuréthane ou des mélanges de ceux-ci.

10. Adhésif sensible à la pression selon la revendication 8 ou 9, **caractérisé en ce que** le matériau de support est un support en mousse thermoplastique qui comprend un poids spécifique supérieur à 50 kg/m³.

11. Adhésif sensible à la pression selon l'une des revendications 8 à 10, **caractérisé en ce que** le revêtement est un film siliconé ou non siliconé qui contient du polyester, du polyéthylène, du polypropylène et/ou du polyéthylène téréphtalate.

12. Adhésif sensible à la pression selon l'une des revendications 8 à 11, **caractérisé en ce qu'**une première et une seconde faces de l'adhésif sensible à la pression sont adhésives, l'adhésif selon l'une des revendications 1 à 5 se trouvant au moins sur la première face.

13. Adhésif sensible à la pression pouvant être obtenu à partir d'un adhésif selon l'une des revendications 1 à 6 ou d'un adhésif sensible à la pression selon l'une des revendications 8 à 12 par irradiation avec des faisceaux d'électrons.

14. Procédé de fabrication d'un adhésif sensible à la pression, **caractérisé en ce qu'**il contient les étapes suivantes :
(a) mélange d'au moins un copolymère à blocs vinylaromatique multibras, le copolymère à blocs vinylaromatique multibras contenant plus de 10 bras latéraux, comportant au moins une résine adhésive et au moins un agent de réticulation, l'auxiliaire de réticulation étant un monomère diacrylate, un monomère triacrylate, un monomère tétraacrylate ou un monomère acrylate de nombre supérieur, et de préférence un triacrylate de triméthylolpropane, ainsi qu'un agent anti-vieillissement et/ou un agent de protection contre les UV, un solvant étant ajouté ou non ;
(b) application du produit de l'étape (a) sur un matériau de support et/ou un revêtement ; et
(c) irradiation du produit de l'étape (b) avec des faisceaux d'électrons.

15. Utilisation de l'adhésif selon l'une des revendications 1 à 7 ou de l'adhésif sensible à la pression selon l'une des revendications 8 à 12 ou 13 pour le collage sur des surfaces peintes, de préférence pour le collage sur des couches de finition dans l'industrie automobile.
